# EUROPÄISCHE PATENTSCHRIFT

(11) **EP 1 185 782 B1**
(45) Veröffentlichungstag und Bekanntmachung des Hinweises auf die Patenterteilung: **27.10.2004**
(21) Anmeldenummer: 00927111.5
(22) Anmeldetag: 29.04.2000
(51) Int. Cl.: F02M 1/16

(54) **KRAFTSTOFFFRAKTIONIEREINRICHTUNG**
FUEL FRACTIONATION DEVICE
DISPOSITIF DE FRACTIONNEMENT DE CARBURANT

(30) Priorität: 15.06.1999 DE 19927177
(43) Veröffentlichungstag der Anmeldung: 13.03.2002
(73) Patentinhaber: DaimlerChrysler AG, 70567 Stuttgart (DE)
(72) Erfinder: HOLDER, Eberhard, D-72127 Kusterdingen (DE); KEMMLER, Roland, D-70619 Stuttgart (DE); MATT, Martin, D-76646 Bruchsal (DE); PFEFFER, Viktor, D-73760 Ostfildern (DE); PLOG, Carsten, D-88677 Markdorf (DE); STENGEL, Thomas, D-88045 Friedrichshafen (DE)
(86) Internationale Anmeldenummer: PCT/EP2000/003893
(87) Internationale Veröffentlichungsnummer: WO 2000/077382

(56) Entgegenhaltungen:
- DE-A- 3 140 119
- DE-C- 19 713 841
- GB-A- 2 276 668
- US-A- 4 257 366

## Beschreibung

Die Erfindung betrifft eine Kraftstofffraktioniereinrichtung zum Abtrennen einer niedrig siedenden Kraftstofffraktion aus einem flüssigen Kraftstoff einer Brennkraftmaschine, mit den Merkmalen des Oberbegriffes des Anspruches 1.

Die derzeit zum Betrieb von Brennkraftmaschinen, z.B. für Kraftfahrzeuge wie Lastkraftwagen, Personenkraftwagen, Omnibusse, verfügbaren Kraftstoffe stellen einen Kompromiss dar zwischen einerseits Einschränkungen seitens der Kraftstoffhersteller, z.B. aufgrund unterschiedlicher Rohölqualitäten, Herstellungsverfahren, Kosten und Energieaufwand, und andererseits teilweise konträren Anforderungen seitens der Brennkraftmaschinen, wie z.B. sicherer Kaltstart auch bei extrem niedrigen Temperaturen, niedrige Abgas- und Verdunstungsemissionen, geringer Verbrauch, hohe Klopffestigkeit auch bei aufgeladenen Motoren, Verhinderung von Ablagerungen, Vermeidung von Korrosion, geringer Schwefelgehalt, ruhiger Motorlauf und hohe Sicherheit. Um die vorhandenen Kraftstoffe besser an die Anforderungen der Brennkraftmaschinen anpassen zu können, werden Kraftstofffraktioniereinrichtungen der eingangs genannten Art verwendet.

Aus der DE 197 13 841 C1 ist eine derartige Kraftstofffraktioniereinrichtung bekannt, bei der in einem Kraftstoffbehälter, der sowohl durch einen Kraftstofftank eines Kraftfahrzeuges oder aus einem zusätzlich vorhandenen Zwischenbehälter gebildet sein kann, durch Gasabsaugung ein Unterdruck erzeugt wird. Dieser Unterdruck ist bei der bekannten Einrichtung so gewählt, daß aus dem im Kraftstoffbehälter enthaltenen flüssigen Kraftstoff die Komponenten der davon abzutrennenden, niedrig siedenden Kraftstofffraktion verdampfen. Die Gasabsaugung bzw. die Erzeugung des Unterdrucks wird hierbei mittels einer Gasförderpumpe realisiert. Durch diese Gasabsaugung wird außerdem die im Behälter gebildete, dampfförmige, niedrig siedende Kraftstofffraktion aus dem Behälter abgesaugt. Auf der Druckseite der Gasförderpumpe wird eine Kondensation der verdampften Komponenten durchgeführt, um die abgetrennte niedrig siedende Kraftstofffraktion in einem flüssigen Zustand der Brennkraftmaschine zur Verfügung stellen zu können. Um die Leistungsfähigkeit der Kraftstofffraktioniereinrichtung, insbesondere die Fraktionierungsgeschwindigkeit, zu erhöhen, kann die Saugseite der Gasförderpumpe beheizt werden und/oder deren Druckseite gekühlt werden.

Die vorliegende Erfindung beschäftigt sich mit dem Problem, bei einer Kraftstofffraktioniereinrichtung der eingangs genannten Art die Leistungsfähigkeit zu verbessern, insbesondere die Fraktionierungsgeschwindigkeit, zu erhöhen.

Dieses Problem wird erfindungsgemäß durch eine Kraftstofffraktioniereinrichtung mit den Merkmalen des Anspruches 1 gelöst.

Die Erfindung beruht auf dem allgemeinen Gedanken, die Fraktionierung mittels eines Schleppgases durchzuführen, das in den flüssigen Kraftstoff eingebracht wird. Das Schleppgas steigt dann in Form von Blasen oder Bläschen im Kraftstoff auf und reichert sich dabei bevorzugt mit den niedrig siedenden Kraftstoffkomponenten an und sammelt sich oberhalb des Kraftstoffspiegels im Behälter, von wo aus das so gebildete Schleppgas-Kraftstofffraktion-Gemisch aus dem Behälter abgesaugt werden kann. Im Unterschied zum Stand der Technik muß der hier im Behälter durch die Gasabsaugung erzeugte Unterdruck lediglich die Absaugung der im Behälter gebildeten gasförmigen Schleppgas-Kraftstofffraktion-Mischung aus dem Behälter gewährleisten. Der dazu erforderliche Unterdruck ist deutlich geringer als der Unterdruck, der notwendig ist, die Komponenten der niedrig siedenden Kraftstofffraktion aus dem flüssigen Kraftstoff heraus zu verdampfen. Die Druckquelle zur Erzeugung des Unterdruckes sowie der Behälteraufbau kann dadurch einfacher ausgebildet werden.

Zweckmäßigerweise wird jedoch der durch die Gasabsaugung im Behälter erzeugte Unterdruck so dimensioniert, daß er als Antrieb für die Einleitung des Schleppgases verwendet werden kann, so daß weitere Antriebsmittel für die Einbringung des Schleppgases entfallen können. Die Gasabsaugung kann beispielsweise durch die Luftansaugung der Brennkraftmaschine realisiert werden. Dabei wird zumindest ein Teil der für die Verbrennung in der Brennkraftmaschine erforderlichen Luft durch den Behälter angesaugt. Als Schleppgas dient hierbei die Umgebungsluft.

Entsprechend einer besonders vorteilhaften Ausführungsform mit Luft als Schleppgas kann das aus dem Behälter abgesaugte Luft-Kraftstofffraktion-Gemisch der Brennkraftmaschine direkt als brennbare Luft-Kraftstoff-Mischung zugeführt werden, da die mit der niedrig siedenden Kraftstofffraktion angereicherte Luft eine zündfähige Gasmischung bildet.

Alternativ kann die Gasabsaugung auch durch eine spezielle Gaspumpe realisiert werden, wodurch es außerdem möglich ist, auf der Druckseite der Gaspumpe eine Kompression der Schleppgas-Kraftstofffraktion-Mischung durchzuführen.

Anstelle eines offenen Kreislaufes, bei dem die als Schleppgas verwendete Luft zusammen mit der abgetrennten Kraftstofffraktion in Form eines Luft-Kraftstofffraktion-Gemisches der Brennkraftmaschine zur Verbrennung zugeführt wird, wobei demnach das Schleppgas verbraucht wird, kann auch ein geschlossener Kreislauf ausgebildet werden, bei dem nach der Absaugung des Schleppgas-Kraftstofffraktion-Gemisches die Kraftstofffraktions aus dem Schleppgas ausgeschieden wird und (zumindest theoretisch) erneut verwendet werden kann. Hierbei wird die aus der Mischung ausgeschiedene Kraftstofffraktion in einem speziellen Speicher, vorzugsweise im flüssigen Zustand gesammelt, bereitgestellt und bedarfsabhängig der Brennkraftmaschine zugeführt. Das Schleppgas kann entweder wieder im Behälter in den Kraftstoff eingeleitet werden, oder, insbesondere wenn Luft als Schleppgas verwendet wird, in die Umgebung abgeblasen werden.

Entsprechend einer besonders vorteilhaften Ausführungsform der erfindungsgemäßen Kraftstofffraktioniereinrichtung kann der Behälter, in den die Schleppgaseinbringung und aus dem die Absaugung der Schleppgas-Kraftstofffraktion-Mischung erfolgt, durch einen Kraftstofftank gebildet sein, in dem der Kraftstoff für die Brennkraftmaschine bevorratet ist. Bei einem Fahrzeug ist dies demnach der fahrzeugeigene Kraftstofftank für die Kraftstoffversorgung der Brennkraftmaschine.

Weitere wichtige Merkmale und Vorteile der erfindungsgemäßen Kraftstofffraktioniereinrichtung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine schaltplanartige Prinzipdarstellung einer Kraftstofffraktioniereinrichtung nach der Erfindung und
- Fig. 2: eine Ansicht wie in Fig. 1, jedoch einer anderen Ausführungsform der erfindungsgemäßen Kraftstofffraktioniereinrichtung.

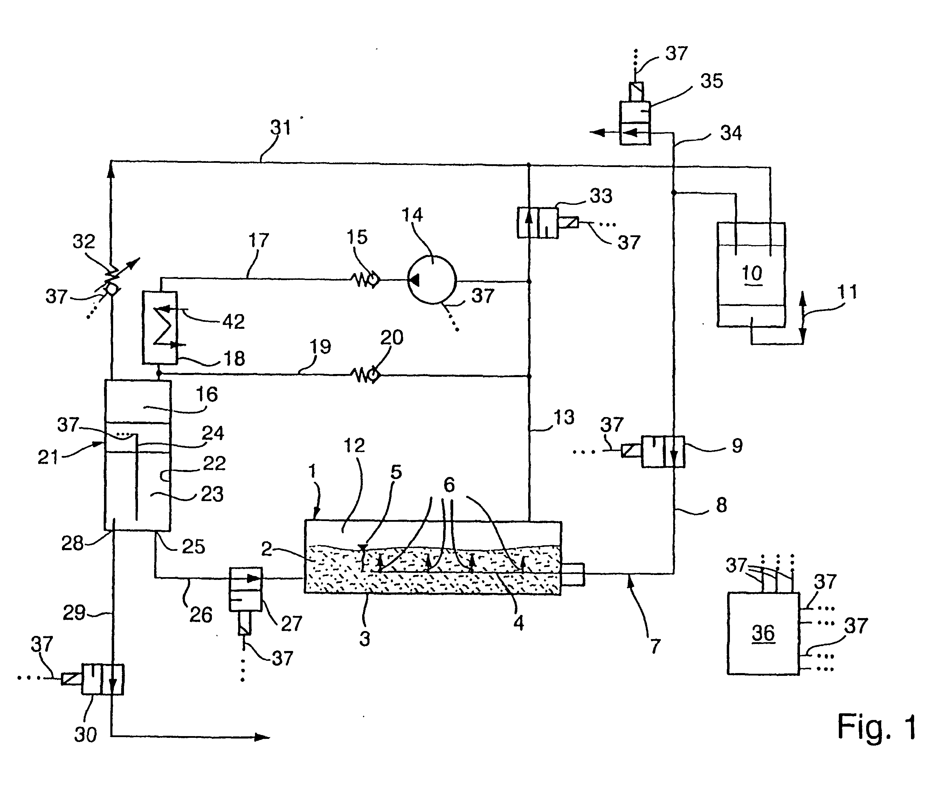

Entsprechend Fig. 1 umfaßt eine erfindungsgemäße Kraftstofffraktioniereinrichtung einen Behälter 1, der Kraftstoff 2, z.b. Diesel oder Benzin, enthält und vorzugsweise durch einen Kraftstofftank einer nicht dargestellten Brennkraftmaschine gebildet ist. Sofern die Kraftstofffraktioniereinrichtung an Bord eines Kraftfahrzeuges installiert ist, wird der Behälter 1 vorzugsweise durch den fahrzeugeigenen Kraftstofftank gebildet, der den Kraftstoff für die Brennkraftmaschine des Fahrzeuges bevorratet. Ebenso ist es möglich, daß der Behälter 1 durch ein vom Kraftstofftank der Brennkraftmaschine separiertes Gefäß gebildet ist und von diesem mit Kraftstoff 2 versorgt wird.

Die erfindungsgemäße Kraftstofffraktioniereinrichtung ist mit einer Schleppgaszuführung 7 ausgestattet, die einen Gasverteiler 4 aufweist, der im Inneren des Behälters bzw. Kraftstofftanks 1 in der Nähe eines Bodens 3 des Kraftstofftanks 1 angebracht oder in diesen Boden 3 integriert ist. Der Gasverteiler 4 ist dabei so tief im Kraftstofftank 1 angeordnet, daß er bei den üblicherweise auftretenden Füllständen in den Kraftstoff 2 eingetaucht ist bzw. sich unterhalb eines Kraftstoffspiegels 5 befindet. Der Gasverteiler 4, der auch als "Swirler" bezeichnet werden kann, ist innen hohl ausgebildet und weist an seiner Außenseite, zumindest in einem dem Kraftstoffspiegel 5 zugewandten Bereich, mehrere Gasaustrittsöffnungen 6 auf.

Die Gasaustrittsöffnungen 6 bilden die Ausgangsseite des Gasverteilers 4, der eingangsseitig an eine Gaszuführungsleitung 8 angeschlossen ist, in der ein Ventil 9 angeordnet ist. Die Gaszuführungsleitung 8 kommuniziert über ein Aktivkohlefilter 10 bei 11 mit einem Schleppgasreservoir oder mit einer Schleppgasquelle, das bzw. die vorzugsweise durch die Umgebung gebildet wird, wobei dann das Schleppgas durch die Umgebungsluft gebildet ist. Der Kraftstofftank 1 enthält oberhalb des Kraftstoffspiegels 5 einen Gassammelraum 12, an den eine Saugleitung 13 angeschlossen ist.

Die erfindungsgemäße Kraftstofffraktioniereinrichtung weist außerdem eine Gaspumpe 14 auf, die saugseitig mit der Saugleitung 13 verbunden ist und die druckseitig mit einer Druckleitung 17 über ein Rückschlagventil 15 mit einem Abscheider 16 verbunden ist. Der Abscheider 16 bewirkt eine Trennung von Schleppgas und Kraftstofffraktion und kann beispielsweise mit einem Zyklon ausgestattet sein und/oder eine selektive Membran aufweisen.

In der Druckleitung 17 ist ein Wärmetauscher 18 angeordnet, der von einem Wärmetauschmedium durchströmbar ist, was durch einen Strömungsweg 42 symbolisch dargestellt ist. Zwischen Abscheider 16 und Wärmetauscher 18 ist eine Überdruckleitung 19 an die Druckleitung 17 angeschlossen, die über ein Überdruckventil 20 mit der Saugleitung 13 verbunden ist.

Der Abscheider 16 ist einem Gehäuse 21 angeordnet, das in seinem Inneren außerdem einen Speicher 22 für eine aus dem Kraftstoff 3 abgetrennte, niedrig siedende Kraftstofffraktion 23 enthält. Außerdem ist im Speicher 22. ein Füllstandssensor 24 angeordnet, der den Füllstand der Kraftstofffraktion 23 kontrolliert. Der Speicher 22 ist mit einem ersten Anschluß 25 über eine Kraftstoffrückführungsleitung 26, in der ein Ventil 27 angeordnet ist, mit dem Tank 1 verbunden. Mit einem zweiten Anschluß 28 wird die im Speicher 22 bevorratete Kraftstofffraktion 23 über eine Kraftstoffzuführungsleitung 29, in der ein Ventil 30 angeordnet ist, der Brennkraftmaschine zur Verfügung gestellt. Beispielsweise wird die Kraftstofffraktion 23 einem Kraftstoffsammler einer Kraftstoffeinspritzanlage oder direkt einem Einspritzventil dieser Kraftstoffeinspritzanlage zugeführt.

Der Abscheider 16 kommuniziert mit einer Gasrückführungsleitung 31, in der ein einstellbares Druckregelventil 32 angeordnet ist, über den Aktivkohlefilter 10 mit der Umgebung 11. Die Saugleitung 13 ist über ein Ventil 33 mit der Gasrückführungsleitung 31 verbindbar. Mit der Gaszuführungsleitung 8 kommuniziert eine Luftansaugleitung 34, in der ein Ventil 35 angeordnet sein kann und die mit einem nicht dargestellten Luftansaugtrakt der Brennkraftmaschine verbunden ist.

Für die Betätigung und die Kontrolle der elektrischen Elemente ist eine Steuerung 36 vorgesehen, die über Signal- bzw. Steuerleitungen 37 mit den jeweiligen Komponenten verbunden ist. Die Signal- bzw. Steuerleitungen 37 sind zur Wahrung der Übersichtlichkeit lediglich angedeutet.

Die Kraftstofffraktioniereinrichtung gemäß Fig. 1 arbeitet wie folgt:

Zu Beginn eines Kaltstarts der Brennkraftmaschine, z.B. durch die Betätigung eines Anlassers, wird die Gaspumpe 14 aktiviert und das Ventil 9 wird geöffnet, während das Ventil 33 geschlossen wird. Durch diese Ventilstellung wird über die Saugleitung 13 im Kraftstoffbehälter 1 ein Unterdruck erzeugt, der sich auf die Schleppgaszuführung 7 ausbreitet, so daß aus der Umgebung 11 durch das Aktivkohlefilter 10 Luft angesaugt werden kann. Diese Luft tritt im Gasverteiler 4 durch dessen Austrittsöffnungen 6 möglichst fein verteilt in den Kraftstoff 2 aus und reichert sich beim Aufsteigen im Kraftstoff 2 bevorzugt mit niedrig siedenden Kraftstoffkomponenten an und sammelt sich im Gassammelraum 12 des Behälters 1. Aufgrund der Gasabsaugung durch die Saugleitung 13 wird das so gebildete Luft-Kraftstofffraktion-Gemisch von der Gaspumpe 14 aus dem Gassammelraum 12 abgesaugt und über die Druckleitung 17 dem Abscheider 16 zugeführt. Im Wärmetauscher 18 wird das komprimierte Luft-Kraftstofffraktion-Gemisch gekühlt, wodurch eine Verflüssigung der Kraftstofffraktion erfolgt. Als Kühlmedium kann entsprechend einer besonderen Ausführungsform der Kraftstoff 2 des Kraftstofftanks 1 verwendet werden, wodurch diesem Wärme zugeführt wird, die die Fraktionierung des Kraftstoffs 2 unterstützt. Der Wärmetauscher 18 kann ebenso mit Umgebungsluft beaufschlagt werden oder mit einem bereits am Fahrzeug vorhandenen Kühlkreis verbunden sein, z.B. mit dem Kühlkreis einer Klimaanlage oder mit einem Motorkühlkreis.

Im Abscheider 16 wird die flüssige Kraftstofffraktion von der Luft getrennt. Während die Kraftstofffraktion 23 in den Speicher 22 eintritt und sich dort sammelt, wird die Luft durch die Gasrückführungsleitung 21 zum Aktivkohlefilter 10 zurückgeführt.

Zur Durchführung des Kaltstarts bzw. zur Versorgung der Brennkraftmaschine mit der als Startkraftstoff dienenden Kraftstofffraktion 23, wird von der Steuerung 36 das Druckregelventil 32 auf den erforderlichen Einspritzdruck eingestellt. Da der Abscheider 16 und der Speicher 22 in dem gemeinsamen Gehäuse 21 untergebracht sind, das als Druckbehälter ausgebildet ist, herrscht der am Druckregelventil 32 eingestellte Druck automatisch auch in der Kraftstofffraktion 23.

Bevor das Ventil 30 zur Zuführung der Kraftstofffraktion 23 zur Brennkraftmaschine geöffnet wird, erfolgt ein kurzzeitiges Öffnen des Ventils 27, um gegebenenfalls sich im Speicher 22 angesammeltes Kondenswasser aus dem Speicher 22 in den Kraftstofftank 1 zurückzubefördern.

Wenn der Kaltstart bzw. eine Warmlaufphase der Brennkraftmaschine beendet ist, schließt das Ventil 30. Die Kraftstofffraktionierung kann dabei fortgesetzt werden, um beispielsweise den Vorrat an niedrig siedender Kraftstofffraktion 23 im Speicher 22 aufzufüllen. Während dieser Fraktionierung wird am Druckregelventil 32 der Kompressionsdruck beispielsweise in Abhängigkeit der Umgebungstemperatur reguliert. Der Kompressionsdruck an der Druckseite der Pumpe 14 wird dabei so gewählt, daß der Partialdruck der im Schleppgas verbleibenden Kraftstoffkomponenten nach dem Abscheiden und nach dem Druckregelventil 32 möglichst niedrig ist, d.h. der Kompressionsdruck wird so eingestellt, daß eine besonders effektive Kondensation und Abscheidung durchgeführt werden kann.

Das Schleppgas wird nach dem Abscheider 16 dem Aktivkohlefilter 10 zugeführt und kann von dort aus erneut in die Schleppgaszuführung 7 eingeleitet werden. Für das Schleppgas ist bei der Ausführungsform gemäß Fig. 1 ein geschlossener Kreislauf gebildet, da das Schleppgas nach dem Abscheiden der Kraftstofffraktion unverbraucht zur Verfügung steht und insbesondere mehrfach Verwendung findet.

Abhängig vom Beladungszustand des Aktivkohlefilters 10 wird dieses entweder regeneriert oder beladen. Durch diese Vorgehensweise kann die Regeneration des beladenen Aktivkohlefilters 10 unabhängig vom Betrieb der Brennkraftmaschine erfolgen. Außerdem stehen für die Kaltstarts der Brennkraftmaschine alle im Kraftstoff verfügbaren niedrig siedenden Komponenten zur Verfügung, denn während der Luftansaugung zum Einblasen der Luft als Schleppgas in den Kraftstoff erfolgt eine Regeneration des Aktivkohlefilters 10. Die Beladung des Aktivkohlefilters 10 kann beim Fraktionierbetrieb durch einen Restanteil an Kraftstoffkomponenten in der rückgeführten Schleppgasmenge erfolgen. Bei beendeter Fraktionierung ist das Ventil 33 geöffnet, so daß die Beladung des Aktivkohlefilters 10 über die Verdunstungsemission des Kraftstoffs 2 aus dem Kraftstofftank 1 erfolgt.

Wenn keine Fraktionierung erfolgt, kann das Aktivkohlefilter 10 auch dadurch regeneriert werden, daß kurzfristig das Ventil 35 öffnet, so daß die Brennkraftmaschine zumindest einen Teil ihrer Ansaugluft durch das Aktivkohlefilter 10 ansaugt.

Zum Beenden der Fraktionierung wird die Gaspumpe 14 abgeschaltet, das Ventil 9 geschlossen und das Ventil 33 geöffnet.

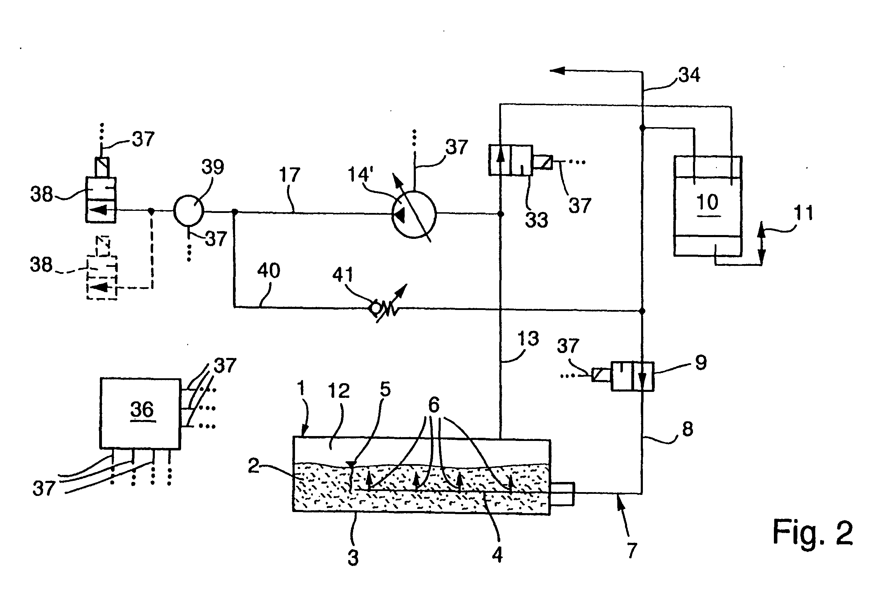

In Fig. 2 ist eine andere Ausführungsform der Kraftstofffraktioniereinrichtung nach der Erfindung dargestellt, wobei gleiche Bestandteile mit gleichen Bezugszeichen bezeichnet sind.

Entsprechend Fig. 2 ist bei dieser Variante eine regelbare Gaspumpe 14' vorgesehen, um die Gasabsaugung zur Erzeugung eines Unterdrucks im Behälter 1 durchzuführen. An ihrer Druckseite ist diese Gaspumpe 14' mit wenigstens einem Einspritzventil 38 verbunden, mit dem das aus dem Gassammelraum 12 des Behälters 1 abgesaugte Luft-Kraftstofffraktion-Gemisch der Brennkraftmaschine bzw. einzelnen Brennkammern oder Ansaugbereichen dieser Brennkammern bereitgestellt wird. In der Druckleitung 17 ist ein Kraftstoffsensor 39 angeordnet, der den Gehalt bzw. die Konzentration der Kraftstofffraktion im Luft-Kraftstoffraktion-Gemisch sensiert und über eine entsprechende Leitung 37 einen damit korrelierten Signalwert an die Steuerung 36 weiterleitet. Die Druckseite der Gaspumpe 14' kommuniziert über eine mit der Druckleitung 17 verbundene Rückführungsleitung 40, in der ein einstellbares Druckregelventil 41 angeordnet ist, mit der Gaszuführungsleitung 8 stromauf des Ventils 9, so daß die Druckseite der Gaspumpe 14' über das Aktivkohlefilter 10 mit der Umgebung 11 verbunden ist.

Zu Beginn eines Kaltstarts sowie einer Warmlaufphase der Brennkraftmaschine wird die Gaspumpe 14' eingeschaltet, das Ventil 33 wird geschlossen und das Ventil 9 wird geöffnet. An der Saugseite der Gaspumpe 14' wird dadurch ein Unterdruck gebildet, der sich über die Saugleitung 13 in den Gassammelraum 12 des Behälters 1 fortpflanzt. Außerdem bewirkt der Unterdruck eine Luftansaugung aus der Umgebung 11, durch das Aktivkohlefilter 10 und durch die Schleppgaszuführung 7 in den Kraftstoff 2. Das angesaugte Schleppgas bzw. die angesaugte Luft tritt im Gasverteiler 4 fein verteilt in den Kraftstoff 2 aus und entzieht dem Kraftstoff 2 die niedrig siedenden Komponenten. Das sich im Gassammelraum 12 sammelnde Luft-Kraftstofffraktion-Gemisch wird über die Saugleitung 13 auf die Druckseite der Gaspumpe 14' befördert. Die Saugleistung bzw. die Förderleistung der Gaspumpe 14' wird in Abhängigkeit der Motordrehzahl, der Motorlast und in Abhängigkeit der am Sensor 39 gemessenen Kraftstoffkonzentration geregelt. Der Druck, mit dem das Luft-Kraftstofffraktion-Gemisch an den Ventilen 38 der Brennkraftmaschine zur Verfügung steht, wird am Druckregelventil 41 eingestellt. Diese Druckregelung erfolgt in Abhängigkeit der Umgebungstemperatur, um beispielsweise eine Kraftstoffkondensation in der Druckleitung 17 zu vermeiden. Nicht gebrauchtes Luft-Kraftstofffraktion-Gemisch überströmt das Druckregelventil 41 und wird in die Gaszuführungsleitung 8 eingeleitet, wo es bei aktiver Fraktionierung erneut durch den Gasverteiler 4 in den Kraftstoff 2 eingeleitet wird.

Die Ansteuerung der Ventile 38 erfolgt in Abhängigkeit der Motordrehzahl, der Motorlast, der Kraftstoffkonzentration im Luft-Kraftstofffraktion-Gemisch und des an der Druckseite der Gaspumpe 14' eingestellten Druckes.

Nach Beendigung des Kaltstarts bzw. der Warmlaufphase wird die Gaspumpe 14' abgeschaltet, das Ventil 9 geschlossen und das Ventil 33 geöffnet. Bei deaktivierter Fraktionierung bindet das Aktivkohlefilter 10 die Verdunstungsemission des Kraftstoffs 2 im Tank 1. Die Regeneration des Aktivkohlefilters 10 kann in herkömmlicher Weise über die Luftansaugleitung 34 durch den Saugbetrieb der Brennkraftmaschine erfolgen. Bevorzugt wird jedoch eine Regeneration während des Fraktionierbetriebes, bei dem die Umgebungsluft durch das Aktivkohlefilter 10 mit entsprechender Regenerationswirkung angesaugt wird.

Die in Fig. 2 dargestellte Ausführungsform der Kraftstofffrakioniereinrichtung, die einen Bestandteil einer Kraftstoffversorgungsanlage der Brennkraftmaschine bildet, erfolgt im Unterschied zu der in Fig. 1 dargestellten Ausführungsform ohne einen Speicher für die niedrig siedende Kraftstofffraktion. Durch die erfindungsgemäß vorgeschlagene Schleppgaszuführung 7 kann quasi "online" ein zündfähiges Luft-Kraftstofffraktion-Gemisch in ausreichender Menge hergestellt werden, das sich zum Starten und zum Warmlaufen einer Brennkraftmaschine in besonderer Weise eignet.

Da bei dieser Ausführungsform die als Schleppgas verwendete Luft verbraucht wird, so daß zur Fraktionierung stets neue Luft aus der Umgebung 11 angesaugt werden muß, handelt es sich hier um einen offenen Kreislauf.

## Patentansprüche

1. Kraftstofffraktioniereinrichtung zum Abtrennen einer niedrig siedenden Kraftstofffraktion (23) aus einem flüssigen Kraftstoff (2) einer Brennkraftmaschine, mit einem den flüssigen Kraftstoff (2) enthaltenden Behälter (1), wobei ein Gasabsaugmittel in diesem Behälter (1) durch Gasabsaugung einen Unterdruck erzeugt und die im Behälter (1) gebildete, dampfförmige, niedrig siedende Kraftstofffraktion (23) aus dem Behälter (1) absaugt und der Brennkraftmaschine zur Verfügung stellt,
**dadurch gekennzeichnet,**
**daß** eine Schleppgaszuführung (7) vorgesehen ist, die im Behälter (1) ein Schleppgas in den flüssigen Kraftstoff (2) einleitet, wobei das Schleppgas mit der dampfförmigen Kraftstofffraktion aus dem Behälter (1) abgesaugt wird.

2. Kraftstofffraktioniereinrichtung nach Anspruch 1,
**dadurch gekennzeichnet,**
**daß** das Schleppgas Luft ist.

3. Kraftstofffraktioniereinrichtung nach Anspruch 1 oder 2,
**dadurch gekennzeichnet,**
**daß** die Schleppgaszuführung (7) einen Gasverteiler (4) aufweist, der im Behälter (1) in den Kraftstoff (2) eingetaucht angeordnet ist, wobei der Gasverteiler (4) Gasaustrittsöffnungen (6) aufweist, die einen fein verteilten Gasaustritt aus dem Gasverteiler (4) in den Kraftstoff (2) ermöglichen.

4. Kraftstofffraktioniereinrichtung nach einem der Ansprüche 1 bis 3,
**dadurch gekennzeichnet,**
**daß** der durch die Gasabsaugung im Behälter (1) erzeugte Unterdruck als Antrieb für die Schleppgaszuführung (7) dient.

5. Kraftstofffraktioniereinrichtung nach einem der Ansprüche 1 bis 4,
**dadurch gekennzeichnet,**
**daß** die Gasabsaugung durch eine Gaspumpe (14;14') bewirkt wird.

6. Kraftstofffraktioniereinrichtung nach einem der Ansprüche 1 bis 4,
**dadurch gekennzeichnet,**
**daß** die Gasabsaugung durch eine Saugwirkung der Brennkraftmaschine bewirkt wird, durch welche die Brennkraftmaschine die für die Verbrennung erforderliche Luft ansaugt.

7. Kraftstofffraktioniereinrichtung nach einem der Ansprüche 1 bis 6,
**dadurch gekennzeichnet,**
**daß** der Behälter durch einen Kraftstofftank (1) der Brennkraftmaschine gebildet ist.

8. Kraftstofffraktioniereinrichtung nach einem der Ansprüche 1 bis 7,
**dadurch gekennzeichnet,**
**daß** im Strömungsweg der aus dem Behälter (1) abgesaugten Schleppgas-Kraftstofffraktion-Mischung ein Kraftstofffraktionssensor (39) angeordnet ist, der die Menge der transportierten Kraftstofffraktion ermittelt.

9. Kraftstofffraktioniereinrichtung nach einem der Ansprüche 1 bis 8,
**dadurch gekennzeichnet,**
**daß** bei Luft als Schleppgas die aus dem Behälter (1) abgesaugte Luft-Kraftstofffraktion-Mischung der Brennkraftmaschine als brennbares Gemisch zugeführt wird.

10. Kraftstofffraktioniereinrichtung nach Anspruch 9,
**dadurch gekennzeichnet,**
**daß** zur Zuführung des Gemisches eine regelbare Gaspumpe (14') verwendet wird.

11. Kraftstofffraktioniereinrichtung nach einem der Ansprüche 1 bis 8,
**dadurch gekennzeichnet,**
**daß** die aus Behälter (1) abgesaugte Schleppgas-Kraftstofffraktion-Mischung einem Abscheider (16) zugeführt wird, der das Schleppgas von der Kraftstofffraktion trennt, wobei die Kraftstofffraktion einem Speicher (22) zugeführt wird.

12. Kraftstofffraktioniereinrichtung nach Anspruch 11,
**dadurch gekennzeichnet,**
**daß** stromauf des Abscheiders (16) ein Wärmetauscher (18) zur Kühlung der Schleppgas-Kraftstofffraktion-Mischung angeordnet ist.

13. Kraftstofffraktioniereinrichtung nach Anspruch 12,
**dadurch gekennzeichnet,**
**daß** der Wärmetauscher (18) zur Erwärmung des Kraftstoffs (2) im Behälter (1) genutzt wird.

## Claims

1. Fuel fractionation system for separating a fuel fraction (23) with a low boiling point from a liquid fuel (2) of an internal combustion engine, having a container (1) containing the liquid fuel (2), wherein a gas suction means in this container (1) creates a suction pressure by gas suction and the vaporous fuel fraction (23) with a low boiling point formed in the container (1) is sucked out of the container (1) and made available to the internal combustion engine,
**characterised in that**
a carrier gas delivery (7) is provided, which introduces a carrier gas into the liquid fuel (2) in the container (1) and the carrier gas is sucked out of the container (1) with the vaporous fuel fraction.

2. Fuel fractionation system as claimed in claim 1,
**characterised in that**
the carrier gas is air.

3. Fuel fraction system as claimed in claim 1 or 2,
**characterised in that**
the carrier gas delivery (7) has a gas distributor (4) which is immersed in the fuel (2) in the container (1) and the gas distributor (4) has gas outlet orifices (6) enabling finely distributed gas to be fed out of the gas distributor (4) into the fuel (2).

4. Fuel fractionation system as claimed in one of claims 1 to 3,
**characterised in that**
the suction pressure generated by the gas suction in the container (1) is used to drive the carrier gas delivery (7).

5. Fuel fractionation system as claimed in one of claims 1 to 4,
**characterised in that**
the gas suction is operated by a gas pump (14; 14').

6. Fuel fractionation system as claimed in one of claims 1 to 4,
**characterised in that**
the gas suction is operated by an intake system of the internal combustion engine, by means of which the internal combustion engine takes in the air needed for combustion purposes.

7. Fuel fractionation system as claimed in one of claims 1 to 6,
**characterised in that**
the container is a fuel tank (1) of the internal combustion engine.

8. Fuel fractionation system as claimed in one of claims 1 to 7,
**characterised in that**
a fuel fractionation sensor (39) is provided in the flow path of the carrier gas/fuel fraction mixture sucked out of the container (1), which detects the quantity of the entrained fuel fraction.

9. Fuel fractionation system as claimed in one of claims 1 to 8,
**characterised in that**
if air is used as the carrier gas, the air/fuel fraction mixture sucked out of the container (1) is delivered to the internal combustion engine as a combustible mixture.

10. Fuel fractionation system as claimed in claim 9,
**characterised in that**
a controllable gas pump (14') is used to deliver the mixture.

11. Fuel fractionation system as claimed in one of claims 1 to 8,
**characterised in that**
the carrier gas/fuel fraction mixture sucked out of the container (1) is delivered to a separator (16), which separates the carrier gas from the fuel fraction and the fuel fraction is delivered to a reservoir (22).

12. Fuel fractionation system as claimed in claim 11,
**characterised in that**
a heat exchanger (18) is disposed upstream of the separator(16) for cooling the carrier gas/fuel fraction mixture.

13. Fuel fractionation system as claimed in claim 12,
**characterised in that**
the heat exchanger (18) is used to heat the fuel (2) in the container (1).

## Revendications

1. Dispositif de fractionnement de carburant pour séparer une fraction de carburant à bas point d'ébullition (23) depuis un carburant liquide (2) d'un moteur à combustion interne, comprenant un récipient (1) contenant le carburant liquide (2), dans lequel un moyen d'aspiration de gaz engendre une dépression dans ce récipient (1) par aspiration des gaz, et aspire hors du récipient (1) la fraction de carburant (23) à bas point d'ébullition, sous forme de vapeur qui est formée dans le récipient (1), et la met à disposition du moteur à combustion interne,
**caractérisé en ce qu'**il est prévu une admission de gaz porteur (7) qui introduit dans le récipient (1) un gaz porteur dans le carburant liquide (2), ledit gaz porteur étant aspiré hors du récipient (1) conjointement avec la fraction de carburant sous forme de vapeur.

2. Dispositif de fractionnement de carburant selon la revendication 1, **caractérisé en ce que** le gaz porteur est de l'air.

3. Dispositif de fractionnement de carburant selon l'une ou l'autre des revendications 1 et 2, **caractérisé en ce que** l'admission de gaz porteur (7) comprend un répartiteur de gaz (4) agencé dans le récipient (1) en plongeant dans le carburant (2), ledit répartiteur de gaz (4) comportant des ouvertures de sortie de gaz (6) qui permettent une sortie du gaz avec répartition fine hors du répartiteur de gaz (4) dans le carburant (2).

4. Dispositif de fractionnement de carburant selon l'une des revendications 1 à 3, **caractérisé en ce que** la dépression engendrée par l'aspiration du gaz dans le récipient (1) sert d'entraînement pour l'admission de gaz porteur (7).

5. Dispositif de fractionnement de carburant selon l'une des revendications 1 à 4, **caractérisé en ce que** l'aspiration du gaz est produite par une pompe à gaz (14 ; 14').

6. Dispositif de fractionnement de carburant selon l'une des revendications 1 à 4, **caractérisé en ce que** l'aspiration du gaz est produite par un effet d'aspiration du moteur à combustion interne, effet grâce auquel le moteur à combustion interne aspire l'air nécessaire pour la combustion.

7. Dispositif de fractionnement de carburant selon l'une des revendications 1 à 6, **caractérisé en ce que** le récipient est constitué par un réservoir de carburant (1) du moteur à combustion interne.

8. Dispositif de fractionnement de carburant selon l'une des revendications 1 à 7, **caractérisé en ce qu'**un détecteur de fraction de carburant (39) est agencé dans le trajet d'écoulement du mélange gaz porteur/fraction de carburant aspiré hors du récipient (1), ledit détecteur déterminant la quantité de la fraction de carburant transportée.

9. Dispositif de fractionnement de carburant selon l'une des revendications 1 à 8, **caractérisé en ce que** lorsque le gaz porteur est de l'air, le mélange air/fraction de carburant aspiré hors du récipient (1) est admis dans le moteur à combustion interne à titre de mélange combustible.

10. Dispositif de fractionnement de carburant selon la revendication 9, **caractérisé en ce que** pour l'admission du mélange on utilise une pompe à gaz régulable (14').

11. Dispositif de fractionnement de carburant selon l'une des revendications 1 à 8, **caractérisé en ce que** le mélange gaz porteur/fraction de carburant aspiré hors du récipient (1) est admis dans un séparateur (16) qui sépare le gaz porteur de la fraction de carburant, ladite fraction de carburant étant admise dans un accumulateur (22).

12. Dispositif de fractionnement de carburant selon la revendication 11, **caractérisé en ce qu'**un échangeur de chaleur (18) est agencé en amont du séparateur pour refroidir le mélange gaz porteur/fraction de carburant.

13. Dispositif de fractionnement de carburant selon la revendication 12, **caractérisé en ce que** l'échangeur de chaleur (18) est utilisé pour échauffer le carburant (2) dans le récipient (1).
